# EUROPEAN PATENT APPLICATION

(11) **EP 1 571 661 A1**
(43) Date of publication of application: **07.09.2005**
(21) Application number: 04300111.4
(22) Date of filing: 04.03.2004
(51) Int. Cl.: G11B 17/04, G11B 33/02

(54) **Storage medium processing device**

(71) Applicant: Thomson Licensing S.A., 92100 Boulogne-Billancourt (FR)
(72) Inventor: Lee, Chee Hong, 510730 Guangzhou (CN); Chang, Geng, 120379 Singapore (SG); Jiang, Shi Liang, 510730 Guangzhou (CN)
(74) Representative: Rossmanith, Manfred

(57) **Abstract**

A storage medium processing device comprises a cabinet (1) having front (2) and top sides (3), a drawer (11) for displacing at least one storage medium (12) between an exchange position in which said drawer (11) projects from an orifice (5) formed in the front side (2) of said cabinet (1) and an operating position in which the drawer (11) is received within the cabinet (1), and a door (7) which is connected to said cabinet (1) and is pivotable around a horizontal axis (13) between a closed position in which it closes said orifice (5) and an open position in which the drawer (11) and the storage medium (12) are allowed to project through said orifice (5). The orifice (5) further comprises a cut-out formed in the top side (3) of the cabinet (1) , and the door (7), in its closed position, extends into said cut-out.

## Description

The present invention relates to a device for processing, i.e. reading and/or recording, exchangeable storage media, in particular disc-shaped media such as CDs, CD ROMs or DVDs.

Devices of this type usually have an essentially cuboid cabinet, a drawer for displacing at least one storage medium between an exchange position in which said drawer and said storage medium project from an orifice formed in a front side of said cabinet, and an operating position for reading or recording, in which the storage medium is received within the cabinet, and a door which is connected to said cabinet and is pivotable around a horizontal axis between a closed position in which it closes said orifice and an open position in which the drawer and the storage medium are allowed to project through said orifice.

There is a general interest to make such a cabinet as compact as possible. The most interesting dimension to reduce is the height, since this may allow a user to install a larger number of different devices one over the other in a given furniture space, or to insert it between a television set and its support without noticeably changing the angle under which the television set is viewed.

In order to make handling of the storage media easy, it would be desirable that when the drawer is fully drawn out from the cabinet, the storage medium be completely outside it, too. However, a guiding mechanism that provides for such a long range of motion of the drawer tends to be expensive. On the other hand, if the storage medium is not completely outside the casing when the drawer is fully drawn out, free space above the storage medium may be necessary for removing and replacing it, so that the height of the cabinet cannot be reduced.

The object of the present invention is to provide a storage medium processing device of the type defined above, which combines a good accessibility of the storage medium or media, when the drawer is fully drawn out, with a limited range of movement of the drawer and a flat overall shape of the cabinet.

The object is achieved by a device as defined in claim 1.

By having the orifice and the door, in its closed position, extend into a top side of the cabinet, a storage medium held in the drawer becomes easily accessible, even if in the fully drawn out state of the drawer, the storage medium is not completely outside the outline of the cabinet.

The free space above the drawer created by the orifice extending to the top side of the cabinet may be used as a free space in which a user may move a storage medium such as an individual CD ROM, a video cassette etc. when placing it on or removing it from the drawer. In a preferred embodiment, in which the drawer holds a plurality of supports for storage medium, the thus obtained free space may be used for fanning out the individual supports into this free space, when the drawer is fully emerged, so that storage media on the individual supports are more easily accessible.

The door is thus essentially formed of two plates, one of which, referred to as the main plate, closes the part of the orifice which is formed in the front side of the cabinet when the door is in the closed position, and the other part, referred to as the rim, closes the part of the orifice formed in the top side of the cabinet.

The pivoting axis of the door may be located near a rear edge of the top portion of the orifice, so that the door may pivot upwards from its closed position to its open position, and, in the open position, the main plate of the door is noticeably higher than the top side of the cabinet, whereby sufficient space above the drawer for handling storage media is provided.

According to a preferred embodiment, however, the axis is located near a lower edge of the front portion of the orifice, so that the door may pivot downwards to its open position.

More preferably still, the axis is located at a distance underneath the lower edge of the front portion, so that even when the pivoting angle between open and closed positions of the door is only 90 ° , the rim (which projects upward when the door is open) does not block the movement of the drawer.

In order to protect the axis from dirt, impacts etc., it is preferably located inside the cabinet. In that case, in order to allow for the desired movement of the door, it should be connected to the door by arms having a portion that extends circumferentially around the axis and that will move outwards through the orifice when the door is opened. In order not to hinder the movement of the drawer, the door, in its open position, should be held entirely below the lower edge of the orifice portion formed in the front side of the cabinet.

Since the door extends across an edge of the cabinet, it may accidentally be subject to forces that tend to pivot it into its open position. In order to protect it from damage by such forces, the device should preferably have a latch connected to the cabinet and displaceable between a position in which it engages said door in the closed position thereof and a position in which it is disengaged from the door, so as to allow it to open.

Preferably, especially in case of the drawer carrying a plurality of supports for storage media, the storage media are discs such as CD ROMs or DVDs.

Further features and advantages of the invention will become apparent from subsequent description of embodiments thereof referring to the appended drawings.
- Fig. 1: is a schematic cross section of a first embodiment of the invention;
- Fig. 2: is a schematic cross section of a device according to a second, advanced embodiment of the invention;
- Fig. 3: is a perspective view of part of the device according to the second embodiment, with the cabinet door open and the drawer in its retracted position; and
- Fig. 4: is a view similar to that of Fig. 3, which shows the drawer projecting from the cabinet.

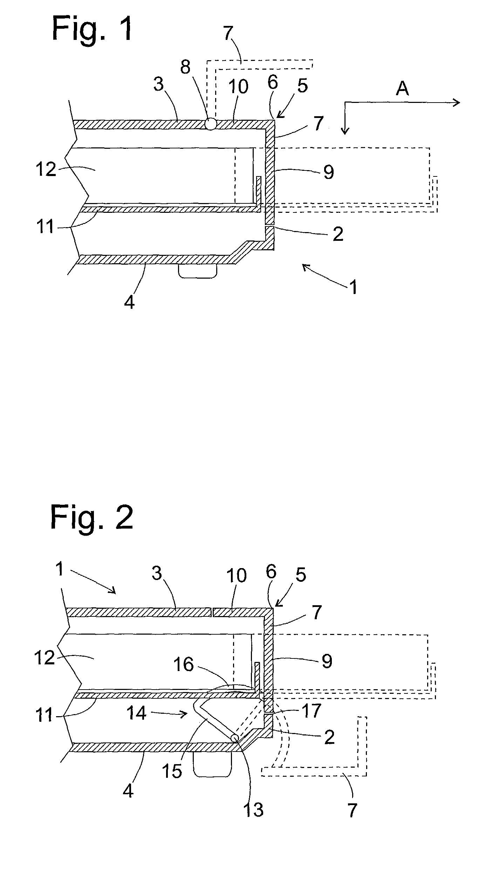

Fig. 1 is a schematic cross section through the front region of a storage medium processing device according to the invention.

The device has a cabinet 1 comprising a front, top and bottom sides 2, 3 and 4, respectively. An orifice 5 of the cabinet is formed of two rectangular cut-outs, one in the front side 2, the other in the top side 3, which meet at an upper front edge 6 of the cabinet.

A door 7 is pivotable between a closed position shown in solid outline in Fig. 1 and an open position shown in phantom. The door 7 is integrally formed of a main plate 9 which, in the closed position of the door, fills the cut-out in the front side 2 of the cabinet 1, and a rim 10 which extends from main plate 9 in a right angle and which, in the closed position of the door 7, fills the cut-out in the top side 3 of the cabinet 1. A hinge 8 is located between the rim 10 and the rear edge of the top side cut-out.

Inside the cabinet, there is a drawer 11 for carrying a recording medium or media 12. When the door 7 is closed, the drawer 11 and the medium 12 are received completely within the cabinet 1. When the door 7 is open, the drawer 11 may be moved into a position shown in phantom in Fig. 1, in which the major part of itself and of the recording medium 12 extend beyond the outline of the cabinet 1. Although the range of movement of the drawer 11 between the two positions shown in Fig. 1 is slightly less than the depth of the recording medium 12, a user may easily raise the medium 12 from the drawer 11 and then withdraw it and replace it by another medium, as indicated by double arrows A in Fig. 1. In this way, although the storage medium 12 does not completely emerge from the cabinet 1 when the drawer 11 projects outside the cabinet, no extra space for handling the medium 12 is required below the top side 3 of the cabinet. Thus, although the movement range of the drawer is small, the height of the cabinet 1 may be kept low.

Fig. 2 is a schematic cross section of a second, preferred embodiment of the invention. In this embodiment, the shape of the cabinet 1, its orifice 5 and the door 7 are the same as in the embodiment of Fig. 1. A difference is in the fact that a hinge for pivoting the door 7 is formed with an axis 13 inside the cabinet 1 and adjacent to its bottom side 4. The axis 13 is connected to the door 7 by preferably at least two arms 14, only one of which is visible in Fig. 2. The arm 14 is essentially formed of a radially-extending portion 15, a first end of which is connected to the axis 13, and a circumferentially extending portion 16 which connects the second end of portion 15 to the inner side of main plate 9, close to its bottom edge. The circumferentially extending portion 16 extends over an angle of approximately 90° with respect to the axis 13, so that the door 7 may pivot by 90° between its solidly outlined closed position and its open position shown in phantom. Since the axis 13 is located noticeably lower than the lower edge 17 of the front portion of the orifice 5, the door is efficiently displaced downwards by pivoting around the axis 13, and in its completely open position, as shown in phantom, both main plate 9 and rim 10 of the door are below said lower edge 17, so that they do not hinder an outward movement of the drawer 11.

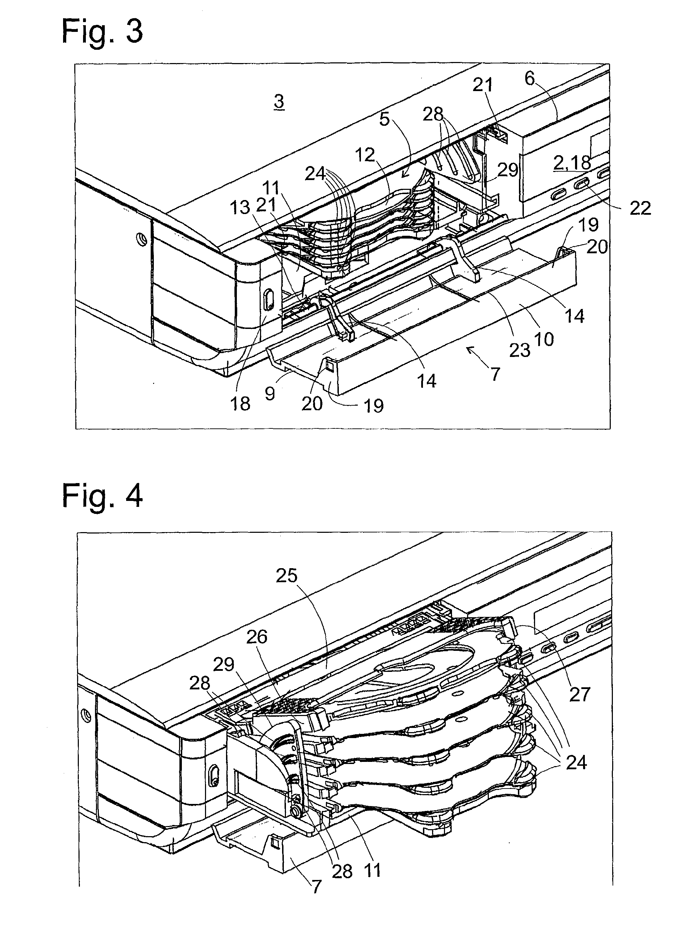

In principle, the storage medium or media 12 might be of any conventional type, including a magnetic tape cassette, an individual disc such as a CD ROM or DVD, or a plurality of such discs in a stacked configuration for random access by one or more reading and/or recording heads (not shown) of the device of the invention. The problem of reducing the height of the cabinet is particularly acute in case of such a stack of multiple media. Therefore, application of the invention to a device for processing multiple recording media will be discussed in particular detail referring to Figs. 3 and 4.

Fig. 3 is a perspective view of a corner of the cabinet of such a device, with a door 7 in its open position but the drawer 11 still inside the cabinet. The main plate 9 of the door, which, in its closed position, is flush with adjacent portions 18 of the front side 2 of the cabinet, extends horizontally immediately above a flat support on which the device is placed or even locally in contact with this support. The arms 14 that hold the door 7 are clearly to be seen, the axis 13 to which they are connected is partly concealed within the cabinet.

The door 7 has two side plates 19 extending at right angles with respect both to the rim 10 and to the main plate 9. Both side plates have a hole 20 formed therein for engagement by a latch 21, which is displaceably connected to the cabinet 1. The latches 21 will hold to the door 7 securely in its closed position when a strong force tending to open the door is applied to it from outside. In this way, the arms 14 are protected from excessive stress that might break them.

The latches 21 are controlled by a microcontroller (not shown) of the device, which will withdraw the latches 21 from the holes 20 only if a storage medium replacement button 22 has been pressed at the front side 2 of the cabinet. If this happens and the latches 21 disengage, the door 7 will pivot from its closed position to the open position shown in Fig. 3, and when the edge 23 of rim 10 is safely below the level of the drawer 11, it will emerge from the cabinet 1 into the position shown in Fig. 4.

As can be seen in Fig. 3 already, the drawer 11 carries a plurality of flat supports 24, which are parallel to one another as long as the drawer is inside the cabinet 1, and each of which is to receive a CD or DVD 12. Each support 24 except the lowest one is pivotably connected to a rear wall 25 of the drawer 11 and has two pins projecting from its right and left flanks 26, 27 and engaging one of four grooves 28 formed in rotateable flanges 29. The flange and the grooves therein are shaped like a quarter of an ellipsis extending from a short half axis to a long half axis. When the drawer 11 is inside the cabinet, the flanges 29 are rotated so that the pins engage those ends of the grooves that correspond to the short half axis of the ellipsis, so that the supports 24 are held parallel to one another. When the drawer 11 emerges from the cabinet, the flanges 29 are rotated by 90°, as can be appreciated from Figs. 3 and 4 although only the right hand flange 29 is visible in Fig. 3 and the left hand flange is visible in Fig. 4. When the drawer 11 has moved out of the cabinet and the flanges 29 are turned, the pins of the supports 24 are at those ends of the grooves 28 that correspond to the long half axis of the ellipsis, whereby the supports 24 are rotated around their hinges and form a fan-like configuration as shown in Fig. 4. Since there is the cut-out in the top side 3 of the cabinet 1, the supports 24 may pivot upwards without having emerged completely from the cabinet 1. Although the range of movement of the drawer is kept short, the height of the cabinet may be very small without making handling of discs on the supports 24 difficult.

## Claims

1. Storage medium processing device comprising a cabinet (1) having front (2) and top sides (3), a drawer (11) for displacing at least one storage medium (12) between an exchange position in which said drawer (11) projects from an orifice (5) formed in the front side (2) of said cabinet (1) and an operating position in which the drawer (11) is received within the cabinet (1), and a door (7) which is connected to said cabinet (1) and is pivotable around an axis (8, 13) between a closed position in which it closes said orifice (5) and an open position in which the drawer (11) is allowed to project through said orifice (5), **characterized in that** the orifice (5) and the door (7), in its closed position, further extend into the top side (3) of said cabinet(1).

2. Device according to claim 1, wherein said door (7) has a main plate (9) and a rim (10) formed at an upper edge of said main plate (9), the main plate (9) closing a front portion of the orifice (5) formed in the front side (2) of the cabinet (1) and the rim (10) closing a top portion of the orifice (5) extending in the top side (3) thereof, and wherein the axis (8) is located near a rear edge of the top portion.

3. Device according to claim 1, wherein said door (7) has a main plate (9) and a rim (10) formed at an upper edge of said main plate (9), the main plate (9) closing a front portion of the orifice (5) formed in the front side (2) of the cabinet (1) and the rim (10) closing a top portion of the orifice (5) extending in the top side thereof, and wherein the axis (13) is located near a lower edge (17) of the front portion.

4. Device according to claim 3, wherein the axis (13) is located underneath said edge (17).

5. Device according to claim 4, wherein the axis (13) is inside the cabinet (1) and the door (7) is connected to said axis (13) by arms (14) that have a portion (16) that extends circumferentially around said axis (13).

6. Device according to any of claims 3 to 5, wherein the door (7), in its open position, is held entirely below said lower edge (17) .

7. Device according to one of the preceding claims, wherein the drawer (11) holds a plurality of supports (24) for storage media (12), said storage media being preferably optical storage disks.

8. Device according to claim 7, wherein the supports (24) are pivotable between a parallel configuration when the drawer (11) is received within the cabinet (1) and a fan configuration when the drawer (11) projects from the cabinet (1).

9. Device according to one of the preceding claims, wherein at least one latch (21) is connected to the cabinet (1) and is displaceable between a position in which it engages said door (7) in the closed position thereof and a position in which it is disengaged from said door (7).

10. Device according to one of the preceding claims, wherein the door (7) rotates for a complete opening less than an angle of 90°, in particular with an angle of 79° - 89°.
